# FASCICULE DE BREVET EUROPEEN

(11) **EP 2 384 925 B1**
(45) Date de publication et mention de la délivrance du brevet: **07.05.2014**
(21) Numéro de dépôt: 11163766.6
(22) Date de dépôt: 26.04.2011
(51) Int. Cl.: B60N 2/28, B29C 49/48, B60N 2/68

(54) **Corps de dossier de siège en plastique soufflé, comportant un dispositif d'ancrage pour la fixation sécurisée d'un siège enfant**
Rückenlehnenkörper eines im Blasverfahren hergestellten Kunststoff-Sitzes, der mit einer Verankerungsvorrichtung für die gesicherte Fixierung eines Kindersitzes ausgestattet ist
Seat backrest body made of blow-molded plastic, comprising an anchoring device for secure attachment of a child safety seat

(30) Priorité: 07.05.2010 FR 1001983
(43) Date de publication de la demande: 09.11.2011
(73) Titulaire: Rehau SA, 57340 Morhange (FR)
(72) Inventeur: Pennerath, Eddy, 57450, Henriville (FR)
(74) Mandataire: Metz, Paul

(56) Documents cités:
- WO-A1-01/92051
- DE-A1-102005 054 299

## Description

La présente invention concerne un dossier de siège pour véhicule, dont le corps est réalisé en matière plastique par soufflage.

La présente invention concerne plus précisément un corps de dossier de siège en matière plastique soufflée, équipé de fils d'ancrage destinés à la fixation sécurisée d'un siège enfant dans un véhicule. Il s'agit de préférence de fils d'ancrage normalisés dits « isofix ».

L'invention concerne également un procédé de fixation d'un tel fil d'ancrage sur un corps de dossier de siège en matière plastique soufflée.

Les dossiers des sièges de véhicule sont généralement formés d'un corps rigide sensiblement plan sur lequel on rajoute un élément de rembourrage, l'ensemble étant ensuite recouvert extérieurement d'un habillage souple par exemple en matière textile, en matière synthétique ou en cuir.

Dans l'art antérieur, on utilise traditionnellement des corps de dossier de siège en métal qui se présentent sous la forme d'une tôle métallique emboutie comportant une pluralité de nervures de rigidification et sur laquelle des tubes métalliques cintrés sont soudés afin de former un cadre périphérique servant d'armature de rigidification.

Les corps de dossier ainsi obtenus présentent une grande rigidité. Cependant, ils sont relativement chers du fait des matériaux utilisés et de leur procédé de fabrication qui requiert de nombreuses étapes. En outre, ils sont également assez lourds ce qui est particulièrement désavantageux dans le domaine automobile.

Pour diminuer le poids global des véhicules, une tendance actuelle consiste à tenter de remplacer les corps de dossier métalliques traditionnels par des corps de dossier en matière plastique moulés par soufflage. Un tel corps de dossier de siège en matière plastique soufflée a par exemple été décrit dans la demande de brevet WO 01 /92051 A au nom de THE DOW CHEMICAL COMPANY.

Les corps de dossier ainsi obtenus sont des pièces creuses beaucoup plus légères, qui présentent de nombreux avantages supplémentaires, comme par exemple leur prix, leur grande facilité de conformation par moulage, et leur volume plus important qui limite la quantité de matière de rembourrage à utiliser.

Cependant, la fixation sur de tels corps de dossier en matière plastique soufflée des éléments techniques annexes devant être rapportés sur le dossier de siège devient problématique du fait des contraintes imposées par le procédé de moulage par soufflage. C'est par exemple le cas des fils d'ancrage, tels que ceux normalisés dits « isofix », destinés à la fixation sécurisée de sièges enfant dans le véhicule.

Les constructeurs automobile sont de plus en plus nombreux à exiger la présence au niveau des sièges arrière du véhicule d'un ou de plusieurs dispositifs d'ancrage, adaptés pour assurer une fixation appropriée et sécuritaire des sièges enfant de sécurité.

Il existe une norme internationale appelée « isofix » qui définit les critères à respecter par ces dispositifs d'ancrage pour permettre une installation sécurisée des sièges enfant, compatible avec l'ensemble des modèles de siège enfant respectant la norme et quel que soit le modèle du véhicule.

Selon cette norme, les dispositifs d'ancrage dits « isofix » doivent comporter un fil en acier de 6 mm de diamètre, présentant une partie rectiligne d'ancrage dont la longueur et la position sont imposées. Ces fils d'ancrage « isofix » doivent être très solidement fixés au véhicule de manière à pouvoir résister à une force de 700 daN par fil.

Les sièges enfant, également appelés sièges bébé ou sièges auto, qui respectent cette norme sont pourvus de chaque côté d'une pince susceptible de se clipper sur la partie rectiligne d'ancrage de ces fils d'ancrage « isofix » de manière à réaliser la fixation sécurisée du siège enfant au véhicule.

Les fils d'ancrage « isofix » devant se trouver à une position normalisée située dans la zone de jonction entre le dossier et l'assise du siège concerné, il est intéressant de les fixer à la partie inférieure du corps de dossier de ce siège.

Selon la pratique antérieure, pour assurer une liaison suffisamment résistante, les extrémités de ces fils d'ancrage étaient classiquement soudées à la tôle métallique formant le corps de dossier de siège ou à un tube en métal lui servant d'armature de rigidification.

Cependant, lorsque l'on remplace le corps de dossier métallique par un corps de dossier en matière plastique soufflée, une telle fixation des fils d'ancrage par soudage devient impossible.

L'un des buts de l'invention est de fournir un corps de dossier de siège en matière plastique soufflée, qui comporte au moins un dispositif fixe d'ancrage, notamment « isofix », permettant la fixation sécurisée d'un siège enfant.

Pour cela, l'invention enseigne un corps de dossier de siège pour véhicule automobile, creux et en matière plastique soufflée, qui comporte en partie basse au moins un dispositif d'ancrage adapté à la fixation sécurisée d'un siège enfant dans le véhicule.

Ce dispositif d'ancrage comporte :
- au moins un ergot creux en matière plastique soufflée, cet ergot comprenant une tête de retenue reliée au corps de dossier par une âme de liaison plus étroite, lui conférant une forme générale de champignon ; et
- un fil d'ancrage recourbé localement et comportant une partie en pont, qui comprend une portion centrale sensiblement rectiligne prolongée par deux bras latéraux s'étendant de part et d'autre de la portion centrale, et deux retours d'accrochage recourbés en crochets prolongeant chacun l'un des bras latéraux de la partie en pont.

Ce fil d'ancrage passe entre le corps de dossier et la tête de retenue de l'ergot et est fixé au corps de dossier par accrochage au moyen de ses retours d'accrochage, l'ergot contribuant à l'immobilisation du fil d'ancrage.

La portion centrale de la partie en pont du fil d'ancrage fait saillie vers l'avant du corps de dossier et constitue une partie rectiligne d'ancrage adaptée à la fixation sécurisée d'un siège enfant dans le véhicule.

L'invention fournit également un dossier de siège pour véhicule, notamment automobile, par exemple un dossier de siège individuel ou de banquette, qui comprend un corps de dossier de siège de ce type.

Un autre but de l'invention est de fournir un procédé avantageux, nouveau et original de fixation d'un fil d'ancrage, notamment « isofix », à un corps de dossier de siège en matière plastique soufflée.

Ce procédé est compatible avec les contraintes et les règles de conception imposées par le moulage par soufflage du corps de dossier en matière plastique, et assure une fixation suffisamment résistante des fils d'ancrage pour garantir une fixation sécurisée des sièges enfant et respecter la norme « isofix ». Il permet un montage simple et rapide des fils d'ancrage tout en garantissant une fixation solide de ces fils au corps de dossier de siège en matière plastique soufflée.

Pour cela, l'invention enseigne un procédé de réalisation d'un dispositif d'ancrage adapté à la fixation sécurisée d'un siège enfant, sur un corps de dossier de siège creux en matière plastique soufflée pour véhicule automobile, en vue de réaliser un corps de dossier de siège selon l'invention.

Ce procédé prévoit de réaliser, simultanément au moulage par soufflage du corps de dossier, au moins un ergot moulé par soufflage en partie basse du corps de dossier. Cet ergot comprend une tête de retenue reliée au corps de dossier par une âme de liaison plus étroite conférant à cet ergot une forme générale de champignon.

On préforme un fil d'ancrage en le recourbant localement de façon qu'il comporte une partie en pont et deux retours d'accrochage recourbés en crochets, la partie en pont comprenant une portion centrale sensiblement rectiligne prolongée par deux bras latéraux qui s'étendent de part et d'autre de la portion centrale, chacun de ces bras latéraux se poursuivant par l'un des retours d'accrochage.

On fait passer ce fil d'ancrage entre le corps de dossier et la tête de retenue de l'ergot, de façon que la portion centrale sensiblement rectiligne de sa partie en pont fasse saillie vers l'avant du corps de dossier.

On fixe le fil d'ancrage au corps de dossier par accrochage au moyen de ses retours d'accrochage, l'ergot contribuant à l'immobilisation du fil d'ancrage.

Le fil d'ancrage est ainsi solidement fixé sur le corps de dossier et immobilisé dans toutes les directions par l'ergot, la portion centrale sensiblement rectiligne de sa partie en pont constituant alors une partie rectiligne d'ancrage adaptée à la fixation sécurisée de sièges enfant dans le véhicule.

D'autres caractéristiques et avantages de l'invention apparaîtront à la lecture de la description détaillée qui va suivre, description faite en référence aux dessins annexés, dans lesquels :
- la figure 1 est une vue générale en perspective de l'avant d'un corps de dossier de siège selon une première variante de l'invention ;
- la figure 2 est un agrandissement du détail encerclé sur la figure 1, qui illustre plus particulièrement un dispositif d'ancrage fixé en partie basse du corps de dossier selon la première variante de l'invention ;
- la figure 3 est une vue de profil du détail de la figure 2 ;
- la figure 4 est une vue de dessous du détail de la figure 2 ;
- les figures 5 à 10 sont des vues schématiques, à chaque fois de face en perspective et de dessous en coupe la tête de retenue des ergots étant enlevée, qui représentent les différentes étapes successives du procédé de réalisation d'un dispositif d'ancrage selon une première variante du procédé selon l'invention et qui correspondent :
   - pour les figures 5 et 6, aux ergots obtenus en partie basse du corps de dossier de siège lors du moulage par soufflage, le fil d'ancrage préformé indépendamment étant positionné en vis-à-vis de ces ergots ;
   - pour les figures 7 et 8, à l'étape d'engagement du fil d'ancrage préformé sur les ergots ;
   - pour les figures 9 et 10, à l'étape de fixation du fil d'ancrage par serrage de ses retours d'accrochage autour des âmes de liaison des ergots ;

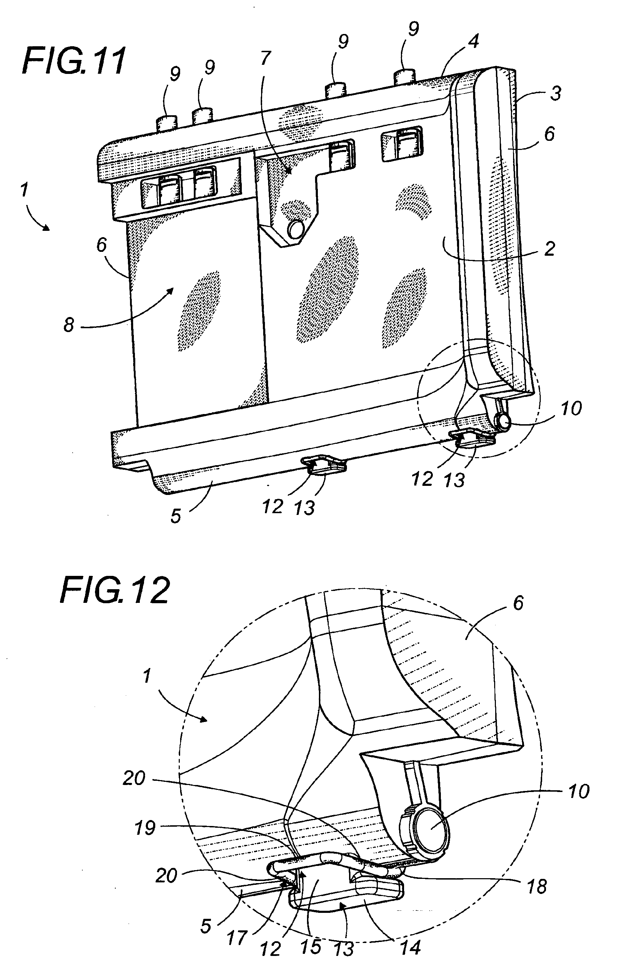

- la figure 11 est une vue générale en perspective de l'avant d'un corps de dossier de siège selon une deuxième variante de l'invention ;
- la figure 12 est un agrandissement en perspective du détail encerclé sur la figure 11, qui illustre plus particulièrement un dispositif d'ancrage selon la deuxième variante de l'invention ;

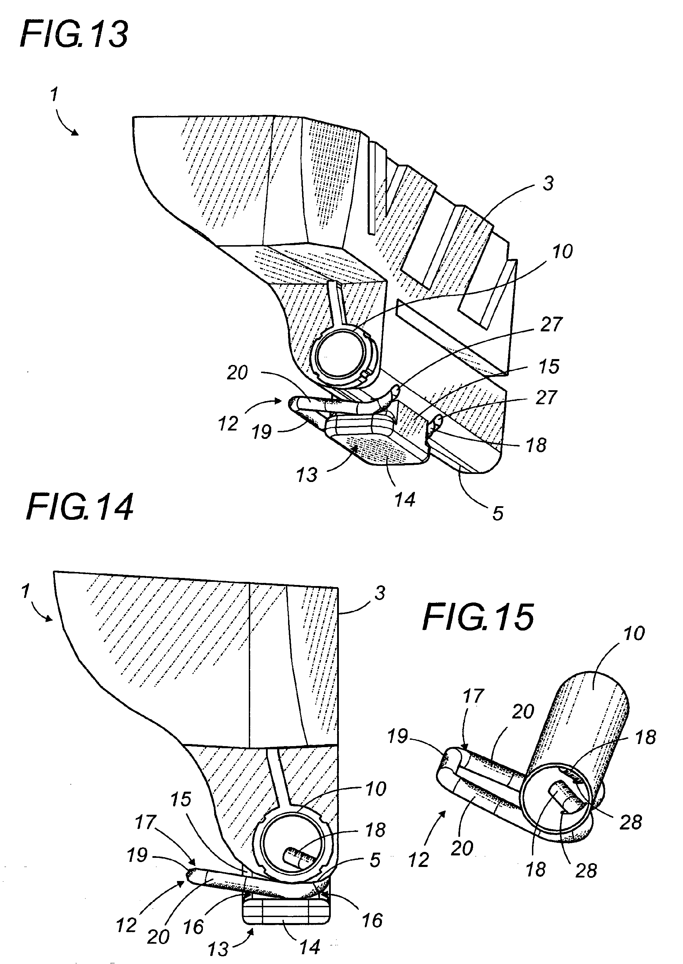

- la figure 13 est une vue de profil en perspective du détail de la figure 12;
- la figure 14 est une vue de profil du détail de la figure 12 ;
- la figure 15 est une vue de profil en perspective du fil d'ancrage et du tube seul, le corps de dossier de siège n'étant pas représenté ;

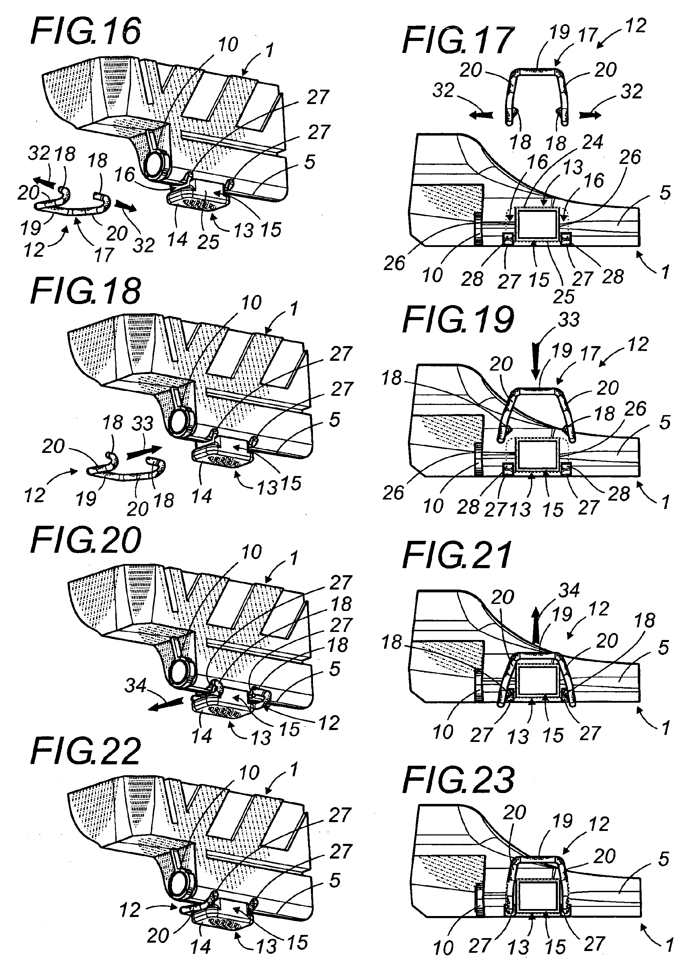

- les figures 16 à 23 sont des vues schématiques, à chaque fois de dos en perspective et de dessous en coupe la tête de retenue de l'ergot étant enlevée, qui représentent les différentes étapes successives du procédé de réalisation d'un dispositif d'ancrage selon une deuxième variante du procédé selon l'invention et qui correspondent :
   - pour les figures 16 et 17, à l'ergot obtenu en partie basse du corps de dossier de siège lors du moulage par soufflage, le fil d'ancrage préformé indépendamment étant positionné en vis-à-vis de cet ergot ;
   - pour les figures 18 et 19, à l'étape d'écartement des bras latéraux du fil d'ancrage et d'engagement du fil d'ancrage sur l'ergot ;
   - pour les figures 20 et 21, à l'étape d'insertion des extrémités du fil d'ancrage dans les orifices du corps de dossier et les orifices du tube de rigidification ;
   - pour les figures 22 et 23, à l'étape d'engagement des retours d'accrochage du fil d'ancrage dans les orifices du corps de dossier et du tube de rigidification, et d'immobilisation du fil d'ancrage en position finale d'utilisation.

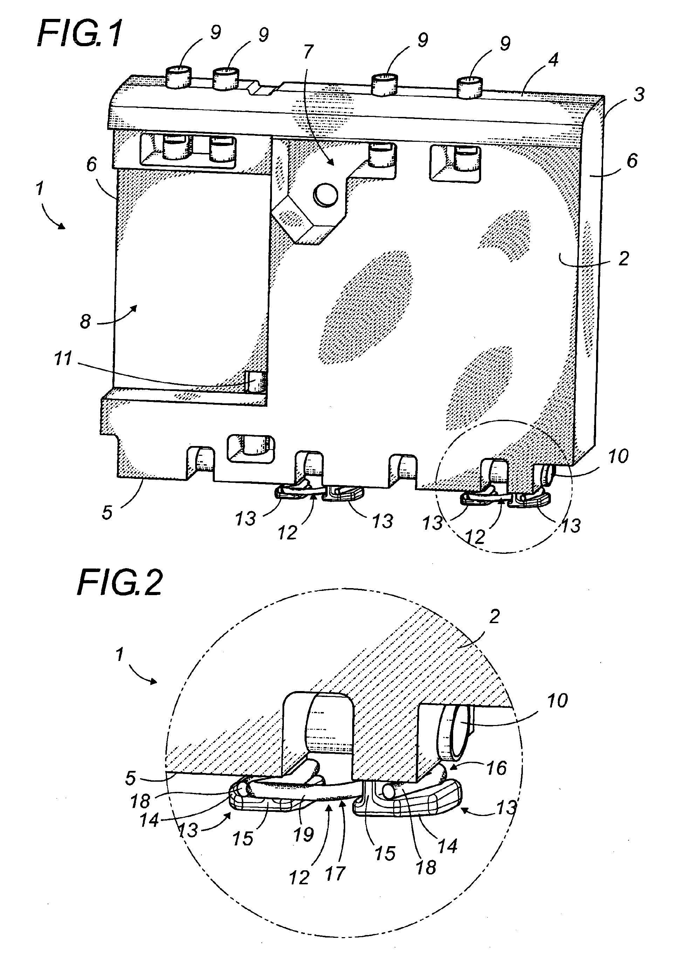

Le corps de dossier de siège et le procédé selon l'invention vont maintenant être décrits de façon détaillée en référence aux figures 1 à 23. Les éléments équivalents représentés sur les différentes figures porteront les mêmes références numériques.

On définira dans la suite de cette description les notions d'avant et d'arrière en fonction du sens normal de déplacement du véhicule dans lequel le corps de dossier de siège sera monté.

Sur les figures 1 et 11, on a représenté schématiquement un corps 1 de dossier de siège sous la forme d'un volume plan parallélépipédique. Il doit être bien entendu qu'il peut affecter différentes formes particulières, en particulier des formes techniques, ergonomiques ou anatomiques.

Ce corps de dossier de siège est destiné à faire partie d'un siège de véhicule, préférentiellement d'un siège automobile. Cependant, l'invention ne se limite pas à cette application préférentielle. Le corps de dossier selon l'invention peut être utilisé pour la réalisation d'un siège prévu pour n'importe quel type de véhicule sur lequel on veut monter un siège enfant de manière sécurisée.

De même, ce corps 1 de dossier de siège peut indifféremment faire partie d'un dossier de siège individuel ou de siège multiple tel qu'une banquette par exemple. Les exemples illustrés sur les figures 1 et 11 représentent par exemple un corps de dossier de siège pour une banquette dite « 2/3 ».

Selon l'invention, le corps 1 de dossier de siège est une pièce creuse en matière plastique réalisée par un procédé de moulage par soufflage largement connu de l'homme du métier.

Le corps 1 représenté comporte deux parois frontales principales : une paroi avant 2 et une paroi arrière 3, ainsi qu'un ensemble de chants comprenant par exemple un chant supérieur 4, un chant inférieur 5 et deux chants latéraux 6. Entre ces différentes parois et chants se trouve un volume intérieur creux fermé.

Le corps 1 présente une forme globalement plane. Il ne s'agit cependant que d'une forme générale, le corps de dossier de siège pouvant selon les applications présenter sur l'une de ses faces ou sur ses deux faces des formes techniques ou esthétiques quelconques adaptées aux exigences de style de l'application, par exemple convexes, concaves ou avec des nervures ou des renfoncements.

Selon un mode de réalisation préférentiel, la paroi avant 2 du corps 1 de dossier de siège peut par exemple présenter une forme ergonomique adaptée pour recevoir confortablement le dos d'un ou de plusieurs passagers.

La paroi arrière 3 du corps 1 peut au contraire rester parfaitement plate de manière à pouvoir constituer une prolongation du plancher de coffre dans le cas d'un dossier de siège escamotable.

Le corps 1 de dossier de siège peut en outre comporter différents renfoncements et logements techniques, par exemple, comme représenté, un enfoncement 7 de la paroi avant 2 servant de logement à l'enrouleur d'une ceinture de sécurité embarquée, un logement de réception 8 pour un accoudoir et/ou des logements cylindriques 9 disposés sur le chant supérieur 4 du corps 1 permettant l'engagement et le maintien de broches de montage d'un ou plusieurs appuie-têtes.

Afin d'augmenter sa rigidité, le corps 1 de dossier peut comporter dans son volume intérieur un certain nombre de nervures de rigidification internes (non représentées) qui sont formées directement pendant l'étape de moulage par déformation de l'une des parois principales du corps 1 et recollement par thermosoudage de celle-ci sur l'autre de ces parois principales selon une technique connue.

Le corps 1 de dossier peut également être renforcé par un ou plusieurs éléments de rigidification placés dans son volume intérieur creux et par exemple par un ou plusieurs éléments linéaires de rigidification, préférentiellement métalliques, se présentant sous la forme de tubes creux, de profilés pleins à section ronde, carrée ou ovale, ou encore de profilés à section de forme générale en 1 ou en U.

Sur les modes de réalisation préférentiels représentés sur les figures 1 et 11, le corps 1 de dossier de siège renferme dans son volume intérieur creux un tube 10 sensiblement horizontal et un tube 11 sensiblement vertical qui génèrent un effet de rigidification protégé parallèlement par le déposant.

Le tube 10 horizontal, préférentiellement creux et de section circulaire, est disposé dans la partie inférieure du corps 1 de dossier de siège où il s'étend de préférence sur sensiblement toute la largeur du corps 1. Les extrémités de ce tube 10 peuvent être légèrement saillantes à l'extérieur du corps 1 et peuvent avantageusement être utilisées pour réaliser le montage de charnières latérales (non représentées) de fixation du dossier au véhicule.

Selon l'invention, le corps 1 de dossier de siège comporte en partie basse au moins un dispositif d'ancrage destiné à assurer la fixation sécurisée d'un siège enfant contre le dossier. Ce dispositif d'ancrage comporte un fil d'ancrage 12.

Lorsque le corps 1 de dossier comporte un tube 10 en partie basse de son volume intérieur, ou un autre élément linéaire de rigidification situé à ce niveau, celui-ci peut être avantageusement utilisé pour participer à la fixation du fil d'ancrage, comme on le verra par la suite dans la partie du descriptif concernant la deuxième variante du procédé selon l'invention.

Le corps 1 de dossier de siège selon l'invention comporte également au moins un ergot 13 creux et réalisé en matière plastique soufflée simultanément au reste du corps 1 pendant l'opération de moulage par soufflage.

Le corps 1 de dossier comprend de préférence deux ergots 13 ou selon les variantes deux paires d'ergots 13, de manière à réaliser deux dispositifs d'ancrage constituant deux points d'ancrage sécurisé en partie basse du corps 1 de dossier. Ces deux ergots 13 ou paires d'ergots 13 sont prévus avec un espacement entre eux correspondant à la distance séparant habituellement les deux pinces de clippage des sièges enfant, cet écartement étant généralement normalisé.

Bien entendu, le corps de dossier de siège selon l'invention peut comporter un nombre différent d'ergots 13 ou de paires d'ergots 13 et par exemple un nombre supérieur notamment s'il s'agit d'un dossier de siège multiple ou banquette, susceptible de recevoir plusieurs sièges enfant ou d'offrir différents emplacements possible pour un siège enfant, ou un nombre inférieur d'ergots dans le cas d'un modèle de siège enfant ne requérant qu'un unique point d'ancrage pour sa fixation sécurisée.

Ce ou ces ergots 13 prennent préférentiellement naissance au niveau du chant inférieur 5 du corps 1 et s'étendent vers le bas en sous face du corps 1 de dossier.

Chaque ergot 13 comprend une tête de retenue 14 et une âme de liaison 15 plus étroite, reliant la tête de retenue 14 au corps 1 de dossier et conférant à l'ergot 13 une forme générale de champignon.

La tête de retenue 14 est une conformation préférentiellement globalement plane, qui s'étend de préférence sensiblement parallèlement au chant inférieur 5 du corps de dossier et qui définit entre elle et le corps 1 de dossier un ou plusieurs espaces de réception 16 pour le fil d'ancrage 12.

De préférence, il existe dans l'espace de réception 16 une zone de coincement pour le fil d'ancrage 12 qu'il lui est difficile de quitter.

L'épaisseur de la tête de retenue 14 peut être différente selon les endroits. Elle est ainsi préférentiellement plus faible à proximité de l'âme de liaison 15 et augmente progressivement à mesure que l'on s'éloigne de celle-ci de manière à créer une telle zone de coincement dans l'espace de réception 16 à proximité de l'âme de liaison 15. Cependant, cette zone de coincement peut être réalisée d'une façon différente, par exemple par une conformation appropriée du chant inférieur 5 du corps de dossier.

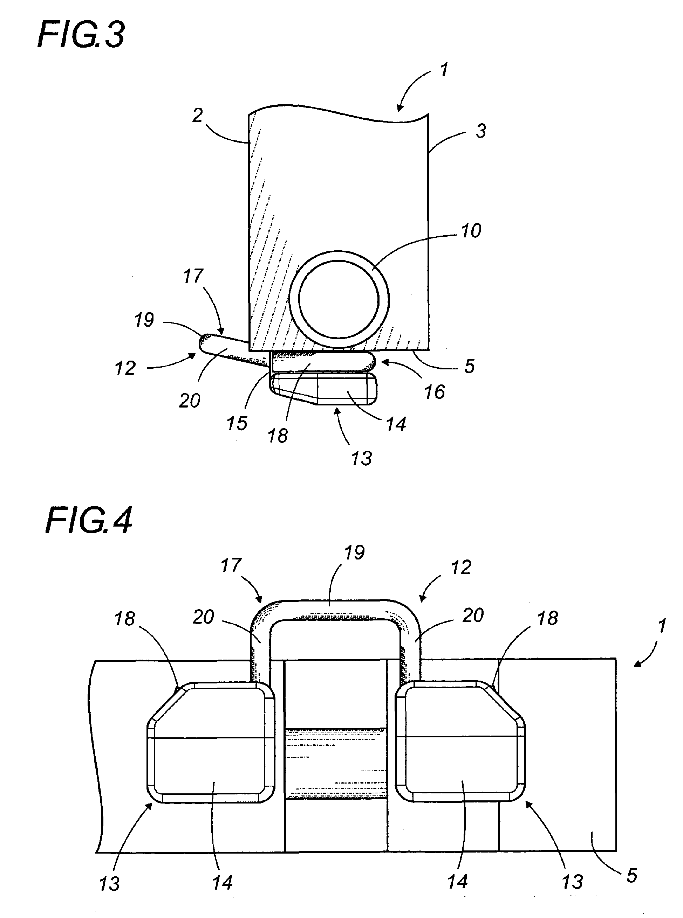

La tête de retenue 14 est par exemple sensiblement carrée ou rectangulaire, à coins arrondis. Sur le mode de réalisation représenté sur les figures 1 à 10, elle est par exemple de forme générale carrée avec un coin extérieur tronqué (figure 4).

L'âme de liaison 15 est une structure creuse qui relie la tête de retenue 14 au chant inférieur 5 du corps 1 de dossier. Elle peut être placée sur un bord de la tête de retenue 14, mais est plus préférentiellement disposée en partie sensiblement centrale de celle-ci de manière à définir plusieurs espaces de réception 16 autour d'elle.

Elle présente une forme de section quelconque de contour adapté pour assurer une mise en place et un maintien satisfaisant du fil d'ancrage 12 monté autour d'elle. Dans le premier mode de réalisation représenté sur les figures 1 à 10, elle est par exemple de section sensiblement trapézoïdale, alors que dans le deuxième mode de réalisation représenté sur les figures 11 à 23, elle présente une section sensiblement rectangulaire.

Dans tous les cas, elle présente un périmètre suffisant pour offrir un ancrage solide et durable au fil d'ancrage 12 monté autour d'elle et accroché à elle, suffisant pour résister aux efforts importants pouvant être exercés sur le siège enfant en cas d'accident.

De préférence, l'âme de liaison 15 ne comporte pas d'angles vifs, mais plutôt des zones arrondies afin de ne pas fragiliser le fil d'ancrage 12 qui est enroulé autour d'elle et de ne pas créer de zone de concentration d'efforts à ce niveau lorsqu'une force de traction s'exerce sur le fil d'ancrage 12.

Le fil d'ancrage 12 est de préférence un tronçon de fil d'acier recourbé localement à plusieurs endroits de manière à former une partie en pont 17 prolongée de part et d'autre par deux retours d'accrochage 18 servant à la fixation du fil d'ancrage 12 sur le corps 1 de dossier.

La partie en pont 17 du fil d'ancrage 12 comprend une portion centrale 19 sensiblement rectiligne, prolongée par deux bras latéraux 20 s'étendant de part et d'autre de la portion centrale 19 et se poursuivant chacun par l'un des retours d'accrochage 18.

Lorsque le fil d'ancrage 12 est fixé sur le corps 1 de dossier de siège, la portion centrale 19 de la partie en pont 17 fait saillie vers l'avant du corps 1 de dossier et constitue une partie rectiligne d'ancrage adaptée à la fixation sécurisée de sièges enfant dans le véhicule.

La partie en pont 17 n'est pas forcément horizontale et peut par exemple être inclinée vers le haut comme on le voit sur les vues de profil des figures 3 et 14. Pour cela, les bras latéraux 20 de la partie en pont 17 peuvent être prévus remontants sur une partie ou la totalité de leur longueur.

Les retours d'accrochage 18 correspondent aux portions d'extrémité du fil d'ancrage 12. Ils sont recourbés à la manière d'un crochet afin de permettre le verrouillage par accrochage du fil d'ancrage au corps 1 de dossier.

Selon les variantes, ces retours d'accrochage 18 peuvent être recourbés selon différentes directions. Dans le premier mode de réalisation représenté sur les figures 1 à 10, les retours d'accrochage 18 sont recourbés vers l'extérieur, alors que dans le deuxième mode de réalisation représenté sur les figures 11 à 23, ils sont recourbés vers le haut et vers l'intérieur.

Deux variantes différentes du corps 1 de dossier de siège selon l'invention ont été représentées sur les figures annexées et vont être successivement décrites ci-dessous.

Dans la première variante représentée sur les figures 1 à 10, le corps 1 de dossier de siège présente en partie inférieure des dispositifs d'ancrage pour siège enfant qui comportent chacun une paire d'ergots 13 et un fil d'ancrage 12.

Ces deux ergots 13 présentent chacun une tête de retenue 14 sensiblement carrée dont l'un des coins extérieurs est tronqué, et une âme de liaison 15 de section sensiblement trapézoïdale disposée en partie sensiblement centrale de la tête de retenue 14 de manière à définir trois espaces de réception 16 autour d'elle situés le long de ses côtés intérieur 21, extérieur 22 et arrière 23.

La partie en pont 17 du fil d'ancrage 12 est disposée entre les deux ergots 13 de la paire d'ergots, avec sa portion centrale 19 sensiblement rectiligne faisant saillie vers l'avant du corps 1 de dossier afin de servir de partie rectiligne d'ancrage pour la fixation sécurisée d'un siège enfant.

Les deux bras latéraux 20 de la partie en pont 17 du fil d'ancrage 12 sont plaqués contre les côtés intérieurs 21 de l'âme de liaison 15 des ergots 13. Ils sont logés entre le chant inférieur 5 du corps 1 et la tête de retenue 14 de l'ergot 13 dans les espaces de réception 16 situés le long de ces côtés intérieurs 21.

Les deux retours d'accrochage 18 du fil d'ancrage 12 passent chacun entre le chant inférieur 5 du corps 1 de dossier et la tête de retenue 14 de l'un des ergots 13 et viennent s'enrouler en crochet chacun autour de l'âme de liaison 15 de l'un des ergots 13.

Ces retours d'accrochage 18 sont serrés autour des âmes de liaison 15 des ergots 13 et verrouillent ainsi le fil d'ancrage 12 au corps 1 de dossier.

Afin d'éviter tout jeu entre le fil d'ancrage 12 et le corps 1 de dossier, les retours d'accrochage 18 sont plaqués contre le côté arrière 23 et le côté extérieur 22 préférentiellement incliné de l'âme de liaison 15 correspondante et se retrouvent coincés entre le chant inférieur 5 du corps 1 de dossier et la tête de retenue 14 correspondante dans les espaces de réception 16 qui sont de préférence conformés en gorge de coincement pour les retours d'accrochage 18.

Le fil d'ancrage 12 est ainsi solidement fixé au corps 1 de dossier et l'absence de jeu permet d'éviter les vibrations ultérieures lors du roulage, qui sont particulièrement désavantageuses dans le domaine de l'automobile.

Dans cette première variante, les ergots 13 remplissent une double fonction : Ils garantissent l'immobilisation du fil d'ancrage 12 que ce soit latéralement ou dans les autres directions, et ils assurent la retenue à l'arrachement du fil d'ancrage 12 en reprenant les efforts subis par le fil d'ancrage 12 lorsqu'une force de traction est exercée par le siège enfant sur le fil d'ancrage et en transmettant ces efforts au corps 1 de dossier de siège.

Dans la seconde variante représentée sur les figures 11 à 23, le corps 1 de dossier de siège présente en partie inférieure des dispositifs d'ancrage pour siège enfant qui comportent chacun un unique ergot 13 et un fil d'ancrage 12.

Cet ergot 13, généralement de taille plus importante que ceux de la variante précédent, présente une tête de retenue 14 sensiblement rectangulaire et une âme de liaison 15 de section également sensiblement rectangulaire et de largueur équivalente à celle de la tête de retenue 14 pour une longueur inférieure.

L'âme de liaison 15 est disposée en partie sensiblement centrale de la tête de retenue 14 de manière que ses parois avant 24 et arrière 25 affleurent avec celles de la tête de retenue 14 et que ses parois latérales 26 se trouvent en retrait par rapport à celles correspondantes de la tête de retenue 14, définissant ainsi deux espaces de réception 16 qui s'étendent de part et d'autre de l'âme de liaison 15 le long de ses parois latérales 26.

La partie en pont 17 du fil d'ancrage 12 est engagée autour de l'âme de liaison 15 de l'ergot 13, avec sa portion centrale 19 sensiblement rectiligne faisant saillie à l'avant de la paroi avant 24 de l'âme de liaison 15 et vers l'avant du corps 1 de dossier afin de servir de partie rectiligne d'ancrage pour la fixation sécurisée d'un siège enfant.

Les deux bras latéraux 20 de la partie en pont 17 du fil d'ancrage 12 sont disposés de part et d'autre de l'âme de liaison 15 en appui contre les parois latérales 26 de l'âme de liaison 15. Ils sont logés entre le chant inférieur 5 du corps 1 et la tête de retenue 14 de l'ergot 13 dans les espaces de réception 16 situés le long de ces parois latérales 26.

Les deux retours d'accrochage 18 du fil d'ancrage 12 qui s'étendent dans le prolongement des bras latéraux 20 sont recourbés vers le haut et vers l'intérieur, c'est-à-dire l'un vers l'autre. Ils sont engagés à travers deux orifices 27 du corps 1 de dossier, de préférence situés sur la paroi arrière 3 du corps 1, puis dans deux orifices 28 du tube 10 horizontal qui s'étend à l'intérieur du corps 1 de dossier en partie basse de celui-ci.

Les orifices 27 du corps 1 de dossier sont situés en vis-à-vis et dans le prolongement des orifices 28 du tube 10, de manière à donner accès aux orifices 28 du tube et ainsi à permettre que les retours d'accrochage 18 du fil d'ancrage 12 soient engagés dans les orifices 28 du tube 10 en passant à travers les orifices 27 du corps de dossier.

Les retours d'accrochage 18 sont bloqués dans cette position engagée du fait de l'inclinaison de leur extrémité l'une vers l'autre (vers l'intérieur) qui s'oppose au retrait des retours d'accrochage 18 hors des orifices 28 du tube 10.

Le fil d'ancrage 12 est serré contre les parois latérales 26 de l'âme de liaison 15 au moyen de ses deux bras latéraux 20 et est ancré dans le tube 10 du corps de dossier au moyen de ses retours d'accrochage 18. Il est ainsi solidement fixé au corps 1 de dossier et tout jeu susceptible de causer des vibrations indésirables par la suite est évité.

Dans cette seconde variante, l'ergot 13 remplit uniquement la fonction d'immobilisation du fil d'ancrage 12 dans toutes les directions. La retenue à l'arrachement du fil d'ancrage 12 est assurée par le tube 10 auquel sont transmis, par l'intermédiaire des retours d'accrochage 18, les efforts subis par le fil d'ancrage 12. Le tube 10 reprend ainsi les efforts de traction exercés sur le fil d'ancrage 12 par le siège enfant en cas de freinage brutal pendant le roulage ou en cas d'accident. Le tube 10 étant très solide et rigide, la résistance du fil d'ancrage 12 à la traction est très importante dans cette variante.

L'immobilisation par l'ergot 13 du fil d'ancrage 12 peut être encore améliorée en prévoyant par exemple de réaliser les bras latéraux 20 légèrement inclinés l'un vers l'autre en direction de l'avant de la partie en pont 17, c'est-à-dire se rapprochant l'un vers l'autre lorsqu'ils se rapprochent de la portion centrale 19, comme on peut le voir sur la figure 23. La partie en pont 17 du fil d'ancrage présente ainsi une forme auto-serrante autour de l'âme de liaison 15 de l'ergot 13 qui s'oppose à tout mouvement de recul du fil d'ancrage 12.

Bien entendu, les deux variantes qui ont été décrites ci-dessus et représentées sur les différentes figures ne sont que des exemples préférentiels de réalisation, bien d'autres variantes pouvant être imaginées par l'homme du métier sans sortir du cadre de l'invention.

Par exemple, la paire d'ergots 13 de la première variante peut être remplacée par un ergot central unique comme dans la seconde variante, autour duquel s'enroulent les retours d'accrochage 18 du fil d'ancrage 12 pour assurer son immobilisation et sa retenue à l'arrachement. Dans ce cas, on choisit pour l'âme de liaison 15 de l'ergot 13 une forme de section adaptée pour réaliser l'immobilisation du fil d'ancrage 12.

De même, on peut également imaginer de remplacer l'ergot 13 central unique de la deuxième variante par une paire d'ergots 13 comme dans la première variante. Dans ce cas, la partie en pont 17 du fil d'ancrage 12 passe entre les deux ergots 13 de la paire d'ergots afin de garantir son blocage latéral et se poursuit comme précédemment par deux retours d'accrochage 18 recourbés vers le haut afin de s'engager dans les deux orifices 28 du tube 10.

Par ailleurs, le tube horizontal 10 de la deuxième variante peut être remplacé par tout autre élément de rigidification approprié, linéaire ou de forme et de nature quelconques, placé dans ou contre le corps 1 de dossier.

L'invention enseigne également un procédé de réalisation d'un dispositif d'ancrage adapté à la fixation sécurisée d'un siège enfant, sur un corps 1 de dossier de siège creux en matière plastique soufflée pour véhicule automobile.

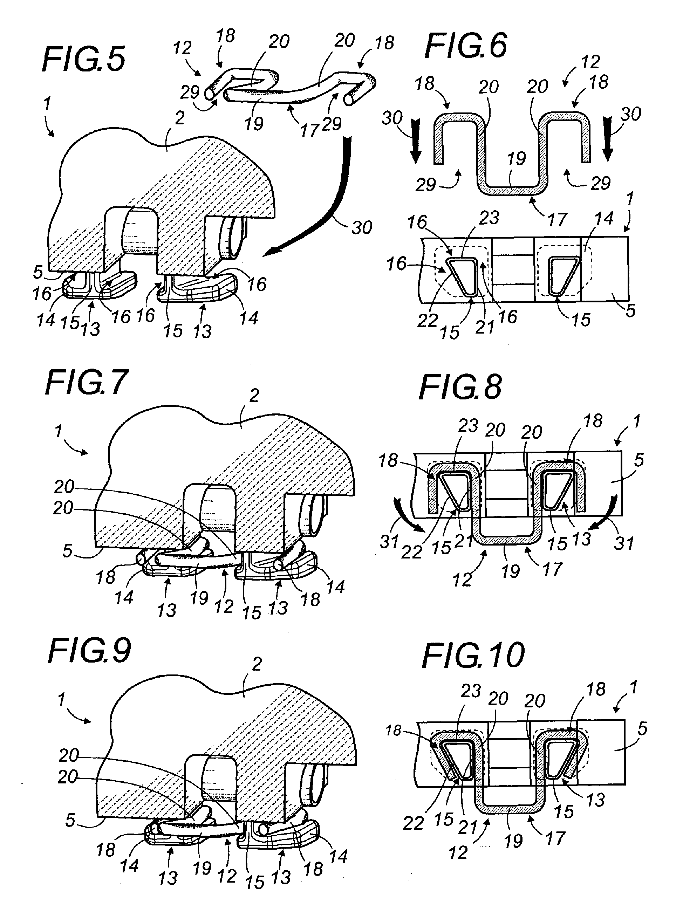

Deux exemples préférentiels de ce procédé, qui correspondent aux deux variantes de corps de dossier de siège précédemment décrites, ont été représentés schématiquement sur les figures 5 à 10 pour le premier et 16 à 23 pour le second. Ces deux exemples de procédé vont être décrits ci-dessous en référence à ces figures.

Selon le premier exemple du procédé selon l'invention, on commence par réaliser, simultanément au moulage par soufflage du corps 1 de dossier, une paire d'ergots 13 moulés par soufflage en partie basse du corps 1 de dossier. Ces ergots 13 correspondent à ceux déjà décrits en référence aux figures 1 à 4.

A la sortie de l'étape de moulage par soufflage, le corps 1 de dossier se présente comme représenté sur les figures 5 et 6.

Parallèlement à cela, on préforme le fil d'ancrage 12 en le recourbant localement de façon qu'il comporte une partie en pont 17 et deux retours d'accrochage 18 recourbés vers l'extérieur comme déjà décrit. A ce stade, représenté sur les figures 5 et 6, les retours d'accrochage 18 sont conformés en crochets ouverts, leur extrémité n'étant pas repliée vers la partie en pont 17. Ils comportent ainsi une large ouverture d'engagement 29.

Le fil d'ancrage 12 préformé est placé en position couchée sensiblement horizontale et est disposé derrière les ergots 13 comme représenté sur les figures 5 et 6, les ouvertures d'engagement 29 des crochets ouverts formés par ses retours d'accrochage 18 faisant face aux âmes de liaison 15 des ergots 13.

On déplace ensuite le fil d'ancrage 12 vers l'avant comme symbolisé par les flèches 30 des figures 5 et 6 et on insère sa partie en pont 17 entre les deux ergots 13, de façon que sa portion centrale 19 sensiblement rectiligne fasse saillie vers l'avant du corps 1 de dossier, et de façon que chaque âme de liaison 15 des ergots 13 s'engage dans l'un des retours d'accrochage 18 recourbés en crochets ouverts par son ouverture d'engagement 29.

Pour cela, on fait passer le fil d'ancrage 12 entre le corps 1 de dossier et la tête de retenue 14 des ergots 13, les retours d'accrochage 18 et les bras latéraux 20 de la partie en pont 17 s'engageant dans les espaces de réception 16 situés autour de l'âme de liaison 15.

Lorsque l'on préforme le fil d'ancrage 12, on choisit de préférence pour la portion centrale 19 une longueur qui correspond sensiblement à l'écartement entre les âmes de liaison 15 des ergots 13 de façon que les bras latéraux 20 de la partie en pont 17 se retrouvent en appui contre le côté intérieur 21 des âmes de liaison 15 lorsque l'on insère le fil d'ancrage 12 entre les ergots 13. La longueur de la portion centrale 19 peut même être choisie légèrement supérieure à l'écartement entre les âmes de liaison 15 des ergots 13 de façon que la partie en pont 17 soit montée un peu en force entre les ergots 13 et que les bras latéraux 20 se retrouvent en appui serré contre le côté intérieur 21 des âmes de liaison 15 améliorant ainsi l'immobilisation du fil d'ancrage 12 et garantissant l'absence de jeu à ce niveau.

Le fil d'ancrage 12 est avancé jusqu'à ce que les retours d'accrochage 18 soient plaqués contre les côtés arrière 23 de l'âme de liaison 15 des ergots 13. A la fin de cette étape d'engagement, on se retrouve dans la configuration illustrée sur les figures 7 et 8.

La dernière étape de ce procédé consiste à verrouiller le fil d'ancrage 12 sur le corps 1 de dossier au moyen des retours d'accrochage 18. Pour cela, on enroule et on serre les retours d'accrochage 18 autour des âmes de liaison 15 sur lesquelles ils sont engagés.

Les retours d'accrochage 18 sont serrés à l'aide d'un outil autour des âmes de liaison 15 au cours d'une opération de sertissage. Pendant celle-ci, l'extrémité libre des retours d'accrochage 18 est repoussée contre le côté extérieur 22 incliné de l'âme de liaison 15 correspondante, comme symbolisé par les flèches 31 de la figure 8, de manière à refermer les crochets ouverts formés par les retours d'accrochage.

Lors de l'opération de sertissage, l'extrémité libre des retours d'accrochage 18 est de préférence repoussée plus loin que le côté extérieur 22 de l'âme de liaison 15 de manière à déformer la matière plastique constitutive de l'ergot 13. Du fait de l'élasticité naturelle de la matière plastique supérieure à celle de l'acier, la paroi de l'âme de liaison 15 a tendance à revenir à sa position initiale une fois l'opération de sertissage terminée, alors que l'extrémité libre des retours d'accrochage 18 reste déformée et enfoncée dans la paroi correspondante de l'âme de liaison 15. On obtient ainsi un serrage renforcé des retours d'accrochage 18 autour de l'âme de liaison 15 des ergots 13 sans aucun jeu, ce qui garantit une immobilisation parfaite du fil d'ancrage 12 et une absence de vibration à ce niveau par la suite.

Après cette opération de serrage, le corps 1 de dossier se trouve dans sa configuration finale représentée sur les figures 9 et 10, le fil d'ancrage 12 étant fixé en position d'utilisation sur le corps 1 de dossier.

On va maintenant décrire le deuxième exemple de procédé selon l'invention représenté sur les figures 16 à 23.

On commence par réaliser, simultanément au moulage par soufflage du corps 1 de dossier, un ergot 13 unique moulé par soufflage en partie basse du corps 1 de dossier. Cet ergot 13 correspond à celui décrit en référence aux figures 11 à 14.

Le corps 1 de dossier renferme en partie basse un tube 10 de rigidification qui présente deux orifices 28 comme décrit précédemment. Ce tube 10 peut indifféremment être inséré dans le volume intérieur creux du corps 1 de dossier postérieurement à son moulage par soufflage ou être directement placé dans le moule avant l'étape de moulage par soufflage.

On ménage également dans le corps 1 de dossier deux orifices 27 de préférence situés en face des orifices 28 du tube 10 et donnant accès à ceux-ci.

Avant le montage du fil d'ancrage 12, le corps 1 de dossier se présente comme représenté sur les figures 16 et 17.

Parallèlement à cela, on préforme le fil d'ancrage 12 en le recourbant localement de façon qu'il comporte une partie en pont 17 et deux retours d'accrochage 18 recourbés en crochets vers le haut et vers l'intérieur comme déjà décrit pour le fil d'ancrage 12 représenté sur les figures 11 à 15.

Le fil d'ancrage 12 préformé est placé en position couchée sensiblement horizontale. Il est disposé devant l'ergot 13 à la hauteur de l'âme de liaison 15, celle-ci faisant face à l'ouverture de la partie en pont 17 du fil d'ancrage 12 comme représenté sur les figures 16 et 17.

Afin de permettre le montage du fil d'ancrage 12, on le déforme élastiquement en écartant les bras latéraux 20 de la partie en pont 17 l'un de l'autre, comme symbolisé par les flèches 32 des figures 16 et 17. Puis, on déplace le fil d'ancrage 12 vers l'arrière en direction de l'ergot 13 selon la flèche 33 des figures 18 et 19 afin d'engager l'âme centrale 15 de l'ergot 13 dans la partie en pont 17 du fil d'ancrage 12.

Pour cela, on fait passer le fil d'ancrage 12 entre le corps 1 de dossier et la tête de retenue 14 de l'ergot 13, et on le recule jusqu'à placer l'extrémité libre des retours d'accrochage 18 en face des orifices 27 du corps 1 de dossier comme illustré sur les figures 20 et 21.

Bien entendu, l'écartement des bras latéraux 20 de la partie en pont 17 doit être adapté pour que les extrémités libres des deux retours d'accrochage 18 se retrouvent en face des orifices 27 du corps 1 de dossier et puissent être engagées à l'intérieur de ceux-ci.

On engage alors les extrémités libres des deux retours d'accrochage 18 dans les orifices 27 du corps 1 de dossier, puis dans ceux 28 du tube 10 qui se trouvent dans le prolongement des orifices 27 du corps.

Le fil d'ancrage 12, dont les bras latéraux 20 ne sont plus maintenus en écartement, est alors tiré vers l'avant selon les flèches 34 des figures 20 et 21, de manière à engager complètement les retours d'accrochage 18 du fil d'ancrage 12 dans les orifices 28 du tube 10.

Lors de ce mouvement vers l'avant du fil d'ancrage 12, l'inclinaison vers l'intérieur, c'est-à-dire en direction l'un de l'autre, des deux retours d'accrochage 18 qui s'engagent progressivement dans les orifices 28 du tube 10 provoque automatiquement le rapprochement l'un vers l'autre (reserrage) des bras latéraux 20 de la partie en pont 17 du fil d'ancrage 12 qui pénètrent dans les espaces de réception 16 disposés de part et d'autre de l'âme de liaison 15.

Ce résultat est accru par un effet ressort du fil d'ancrage 12 qui a été déformé élastiquement et qui maintenant revient en place de lui-même, ses bras latéraux 20 se rapprochant automatiquement l'un de l'autre par rappel élastique, ce qui provoque un serrage autour l'âme de liaison 15 de l'ergot 13 et un blocage des retours d'accrochage 18 dans le tube 10.

A la fin du mouvement de translation vers l'avant du fil d'ancrage 12, les retours d'accrochage 18 sont complètement engagés dans les orifices 28 du tube 10 et ne peuvent plus en ressortir du fait de leur inclinaison vers l'intérieur, les bras latéraux 20 de la partie en pont 17 s'étendent dans les espaces de réception 16 et sont en appui contre les parois latérales 26 de l'âme de liaison 15 de l'ergot 13, et la portion centrale 19 sensiblement rectiligne de la partie en pont 17 fait saillie vers l'avant du corps 1 de dossier. Le fil d'ancrage 12 se trouve alors en position finale d'utilisation comme représenté sur les figures 22 et 23.

A l'état libre du fil d'ancrage 12, l'écartement des bras latéraux 20 peut avantageusement être prévu inférieur à la largeur de l'âme de liaison 15. De ce fait, lorsque par la suite le fil d'ancrage 12 est monté sur l'ergot 13, les bras latéraux 20 se retrouvent en appui serré contre les parois latérales 26 de l'âme de liaison 15. L'immobilisation latérale du fil d'ancrage est ainsi grandement améliorée et tout risque de vibration est évité.

Bien entendu, il existe de nombreuses variantes des deux exemples de procédé précédemment décrits. Ainsi par exemple, dans le second procédé, le fil d'ancrage 12 préformé peut ne pas être placé à l'avant de l'ergot et monté par translation vers l'arrière. Il peut alternativement être placé sous l'ergot et être monté par translation vers le haut, les bras latéraux 20 devant alors être écartés de façon plus importante pour pouvoir franchir la tête de retenue 14 de l'ergot 13.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Corps (1) de dossier de siège pour véhicule automobile, corps (1) creux en matière plastique soufflée **caractérisé :**
**en ce qu'**il comporte en partie basse au moins un dispositif d'ancrage adapté à la fixation sécurisée d'un siège enfant dans le véhicule ;
**en ce que** ce dispositif d'ancrage comporte :
- au moins un ergot (13) creux en matière plastique soufflée, cet ergot (13) comprenant une tête de retenue (14) reliée au corps (1) de dossier par une âme de liaison (15) plus étroite, lui conférant une forme générale de champignon ; et
- un fil d'ancrage (12) recourbé localement et comportant une partie en pont (17), qui comprend une portion centrale (19) sensiblement rectiligne prolongée par deux bras latéraux (20) s'étendant de part et d'autre de la portion centrale (19), et deux retours d'accrochage (18) recourbés en crochets prolongeant chacun l'un des bras latéraux (20) de la partie en pont (17) ;
**en ce que** le fil d'ancrage (12) passe entre le corps (1) de dossier et la tête de retenue (14) de l'ergot (13) et est fixé au corps (1) de dossier par accrochage au moyen de ses retours d'accrochage (18), l'ergot (13) contribuant à l'immobilisation du fil d'ancrage (12) ; et
**en ce que** la portion centrale (19) de la partie en pont (17) du fil d'ancrage (12) fait saillie vers l'avant du corps de dossier et constitue une partie rectiligne d'ancrage adaptée à la fixation sécurisée d'un siège enfant dans le véhicule.

2. Corps (1) de dossier de siège selon la revendication 1 **caractérisé en ce que** l'ergot (13) prend naissance au niveau du chant inférieur (5) du corps (1) de dossier et s'étend vers le bas en sous face du corps (1) de dossier.

3. Corps (1) de dossier de siège selon l'une quelconque des revendications précédentes **caractérisé en ce que** la tête de retenue (14) est globalement plane et définit entre elle et le corps (1) de dossier au moins un espace de réception (16) pour le fil d'ancrage (12).

4. Corps (1) de dossier de siège selon la revendication précédente **caractérisé en ce qu'**il existe une zone de coincement pour le fil d'ancrage (12) dans l'espace de réception (16).

5. Corps (1) de dossier de siège selon l'une quelconque des revendications précédentes **caractérisé en ce que** l'âme de liaison (15) est de section sensiblement trapézoïdale ou sensiblement rectangulaire.

6. Corps (1) de dossier de siège selon l'une quelconque des revendications précédentes **caractérisé en ce que** le fil d'ancrage (12) est un tronçon de fil d'acier.

7. Corps (1) de dossier de siège selon l'une quelconque des revendications précédentes **caractérisé en ce que** les bras latéraux (20) de la partie en pont (17) sont remontants, ou inclinés l'un vers l'autre en direction de l'avant de la partie en pont (17).

8. Corps (1) de dossier de siège selon l'une quelconque des revendications précédentes **caractérisé en ce que** les retours d'accrochage (18) sont recourbés vers l'extérieur, ou sont recourbés vers le haut et vers l'intérieur.

9. Corps (1) de dossier de siège selon l'une quelconque des revendications précédentes **caractérisé en ce que** le dispositif d'ancrage comporte une paire d'ergots (13) et **en ce que** la partie en pont (17) du fil d'ancrage (12) est disposée entre les deux ergots (13) de la paire d'ergots, les deux bras latéraux (20) de la partie en pont (17) étant plaqués contre les côtés intérieurs (21) des âmes de liaison (15) de ces deux ergots (13).

10. Corps (1) de dossier de siège selon la revendication précédente **caractérisé en ce que** chaque retour d'accrochage (18) du fil d'ancrage (12) est enroulé et serré autour de l'âme de liaison (15) de l'un des ergots (13) de la paire d'ergots.

11. Corps (1) de dossier de siège selon l'une quelconque des revendications 1 à 8 **caractérisé en ce que** le dispositif d'ancrage comporte un unique ergot (13) et **en ce que** la partie en pont (17) du fil d'ancrage (12) est engagée autour de l'âme de liaison (15) de l'ergot (13), les deux bras latéraux (20) de la partie en pont (17) étant disposés de part et d'autre de l'âme de liaison (15) en appui contre ses parois latérales (26).

12. Corps (1) de dossier de siège selon l'une quelconque des revendications précédentes **caractérisé en ce que** les retours d'accrochage (18) sont engagés à travers deux orifices (27) du corps (1) de dossier.

13. Corps (1) de dossier de siège selon la revendication précédente **caractérisé en ce qu'**il comporte au moins un tube (10) s'étendant en partie inférieure du corps (1) de dossier et **en ce que** les retours d'accrochage (18) sont engagés à travers deux orifices (28) de ce tube (10).

14. Procédé de réalisation d'un dispositif d'ancrage adapté à la fixation sécurisée d'un siège enfant, sur un corps (1) de dossier de siège creux en matière plastique soufflée pour véhicule automobile, en vue de réaliser un corps (1) de dossier de siège selon la revendication 1, procédé **caractérisé en ce que** :
- simultanément au moulage par soufflage du corps (1) de dossier, on réalise au moins un ergot (13) moulé par soufflage en partie basse du corps (1) de dossier, cet ergot (13) comprenant une tête de retenue (14) reliée au corps (1) de dossier par une âme de liaison (15) plus étroite lui conférant une forme générale de champignon ;
- on préforme un fil d'ancrage (12) en le recourbant localement de façon qu'il comporte une partie en pont (17) et deux retours d'accrochage (18) recourbés en crochets, la partie en pont (17) comprenant une portion centrale (19) sensiblement rectiligne prolongée par deux bras latéraux (20) qui s'étendent de part et d'autre de la portion centrale (19), chacun de ces bras latéraux (20) se poursuivant par l'un des retours d'accrochage (18) ;
- on fait passer le fil d'ancrage (12) entre le corps (1) de dossier et la tête de retenue (14) de l'ergot (13), de façon que la portion centrale (19) sensiblement rectiligne de sa partie en pont (17) fasse saillie vers l'avant du corps (1) de dossier ;
- on fixe le fil d'ancrage (12) au corps (1) de dossier par accrochage au moyen de ses retours d'accrochage (18), l'ergot (13) contribuant à l'immobilisation du fil d'ancrage (12).

15. Procédé de réalisation d'un dispositif d'ancrage selon la revendication 14 **caractérisé en ce que** :
- simultanément au moulage par soufflage du corps (1) de dossier, on réalise une paire d'ergots (13) moulés par soufflage en partie basse du corps (1) de dossier, ces ergots (13) comprenant une tête de retenue (14) reliée au corps (1) de dossier par une âme de liaison (15) plus étroite leur conférant une forme générale de champignon ;
- on préforme un fil d'ancrage (12) en le recourbant localement de façon qu'il comporte une partie en pont (17) et deux retours d'accrochage (18) recourbés vers l'extérieur en crochets ouverts et comportant une ouverture d'engagement (29), la partie en pont (17) comprenant une portion centrale (19) sensiblement rectiligne prolongée par deux bras latéraux (20) qui s'étendent de part et d'autre de la portion centrale (19), chacun de ces bras latéraux (20) se poursuivant par l'un des retours d'accrochage (18) ;
- on insère la partie en pont (17) du fil d'ancrage (12) préformé entre les deux ergots (13) de façon que la portion centrale (19) fasse saillie vers l'avant du corps (1) de dossier, et on engage l'âme de liaison (15) de chacun des deux ergots (13) dans l'un des retours d'accrochage (18) recourbés en crochets ouverts par son ouverture d'engagement (29), les retours d'accrochage (18) venant se placer entre le corps (1) de dossier et la tête de retenue (14) des ergots (13) ;
- on enroule et on serre les retours d'accrochage (18) autour des âmes de liaison (15) sur lesquelles ils sont engagés de manière à refermer les crochets ouverts des retours d'accrochage (18), le fil d'ancrage (12) étant ainsi fixé sur le corps (1) de dossier.

16. Procédé de réalisation d'un dispositif d'ancrage selon la revendication 15 **caractérisé en ce que** lorsque l'on serre les retours d'accrochage (18) autour des âmes de liaison (15), on enfonce les retours d'accrochage (18) dans la paroi des âmes de liaison (15) de manière à déformer la matière plastique constitutive des ergots (13).

17. Procédé de réalisation d'un dispositif d'ancrage selon la revendication 14 **caractérisé en ce que** :
- simultanément au moulage par soufflage du corps (1) de dossier, on réalise un unique ergot (13) moulé par soufflage en partie basse du corps (1) de dossier, cet ergot (13) comprenant une tête de retenue (14) reliée au corps (1) de dossier par une âme de liaison (15) plus étroite lui conférant une forme générale de champignon ;
- on met en place à l'intérieur du corps (1) de dossier et en partie basse de celui-ci un tube (10) comportant deux orifices (28), et on ménage dans le corps (1) de dossier deux orifices (27) donnant accès aux orifices (28) du tube (10) ;
- on préforme un fil d'ancrage (12) en le recourbant localement de façon qu'il comporte une partie en pont (17) et deux retours d'accrochage (18) recourbés en crochets vers le haut et vers l'intérieur, la partie en pont (17) comprenant une portion centrale (19) sensiblement rectiligne prolongée par deux bras latéraux (20) qui s'étendent de part et d'autre de la portion centrale (19), chacun de ces bras latéraux (20) se poursuivant par l'un des retours d'accrochage (18) ;
- on écarte les bras latéraux (20) de la partie en pont (17) et on engage l'âme centrale (15) de l'ergot (13) dans la partie en pont (17) du fil d'ancrage (12) en faisant passer le fil d'ancrage (12) entre le corps (1) de dossier et la tête de retenue (14) de l'ergot (13), jusqu'à placer l'extrémité libre des retours d'accrochage (18) en face des orifices (27) du corps (1) de dossier ;
- On engage les extrémités libres des retours d'accrochage (18) dans les orifices (27) du corps (1) de dossier, puis dans les orifices (28) du tube (10) ;
- On tire le fil d'ancrage (12) vers l'avant, sans maintenir les bras latéraux (20) en écartement, de manière à engager complètement les retours d'accrochage (18) dans les orifices (28) du tube (10) et de façon que la portion centrale (19) de la partie en pont (17) fasse saillie vers l'avant du corps (1) de dossier.

## Patentansprüche

1. Körper (1) einer Rückenlehne eines Sitzes für ein Fahrzeug, hohler Körper (1) aus geblasenem Plastik, **dadurch gekennzeichnet,**
**dass** er im unteren Teil wenigstens eine Verankerungsvorrichtung umfasst, die an die gesicherte Befestigung eines Kindersitzes in dem Fahrzeug angepasst ist;
**dass** die Verankerungsvorrichtung umfasst:
• wenigstens eine hohle Nocke (13) aus geblasenem Plastik, wobei diese Nocke (13) einen Rückhaltekopf (14) umfasst, der mit dem Körper (1) einer Rückenlehne durch einen engeren Verbindungssteg (15) verbunden ist, der ihm eine allgemeine Pilzform verleiht; und
• einen lokal zurückgekrümmten und ein brückenförmiges Teil (17) umfassenden Verankerungsdraht (12), das einen deutlich geraden, zentralen Abschnitt (19) umfasst, der durch zwei laterale Arme (20) verlängert wird, die sich auf jeder Seite des zentralen Abschnitts (19) erstrecken, und zwei als Haken zurückgekrümmte Befestigungsrückläufe (18), die jeweils einen der lateralen Arme (20) des brückenförmigen Teils (17) verlängern;
**dass** der Verankerungsdraht (12) zwischen dem Körper (1) einer Rückenlehne und dem Rückhaltkopf (14) der Nocke (13) hindurchgeführt ist und am Körper (1) einer Rückenlehne durch Befestigung mittels seiner Befestigungsrückläufe (18) befestigt ist, wobei die Nocke (13) zur Immobilisierung des Verankerungsdrahtes (12) beiträgt; und
**dass** der zentrale Abschnitt (19) des brückenförmigen Teils (17) des Verankerungsdrahtes (12) nach vorn aus dem Körper einer Rückenlehne hervorsteht und einen geraden Verankerungsteil bildet, der an die gesicherte Befestigung eines Kindersitzes in dem Fahrzeug angepasst ist.

2. Körper (1) einer Rückenlehne eines Sitzes gemäß Anspruch 1, **dadurch gekennzeichnet, dass** die Nocke (13) an der unteren Kante (5) des Körpers (1) einer Rückenlehne entsteht und sich nach unten an der Unterseite des Körpers (1) einer Rückenlehne erstreckt.

3. Körper (1) einer Rückenlehne eines Sitzes gemäß einem der voranstehenden Ansprüche, **dadurch gekennzeichnet, dass** der Rückhaltekopf (14) global eben ist und zwischen sich und dem Körper (1) einer Rückenlehne wenigstens einen Aufnahmeraum (16) für den Verankerungsdraht (12) definiert.

4. Körper (1) einer Rückenlehne eines Sitzes gemäß dem voranstehenden Ansprüche, **dadurch gekennzeichnet, dass** ein Festklemmbereich für den Verankerungsdraht (12) in dem Aufnahmebereich (16) vorhanden ist.

5. Körper (1) einer Rückenlehne eines Sitzes gemäß einem der voranstehenden Ansprüche, **dadurch gekennzeichnet, dass** der Verbindungssteg (15) einen deutlich trapezförmigen oder deutlich rechteckigen Querschnitt hat.

6. Körper (1) einer Rückenlehne eines Sitzes gemäß einem der voranstehenden Ansprüche, **dadurch gekennzeichnet, dass** der Verankerungsdraht (12) ein Abschnitt aus Stahldraht ist.

7. Körper (1) einer Rückenlehne eines Sitzes gemäß einem der voranstehenden Ansprüche, **dadurch gekennzeichnet, dass** die lateralen Arme (20) des brückenförmigen Teils (17) steigend oder zueinander in Richtung des Vorderteils des brückenförmigen Teils (17) geneigt sind.

8. Körper (1) einer Rückenlehne eines Sitzes gemäß einem der voranstehenden Ansprüche, **dadurch gekennzeichnet, dass** die Befestigungsrückläufe (18) nach außen zurückgekrümmt sind oder nach oben oder nach innen zurückgekrümmt sind.

9. Körper (1) einer Rückenlehne eines Sitzes gemäß einem der voranstehenden Ansprüche, **dadurch gekennzeichnet, dass** die Verankerungsvorrichtung ein Nockenpaar (13) umfasst und dass der brückenförmige Teil (17) des Verankerungsdrahtes (12) zwischen den zwei Nocken (13) des Nockenpaars angeordnet ist, wobei die zwei lateralen Arme (20) des brückenförmigen Teils (17) gegen die inneren Seiten (21) der Verbindungsstege (15) dieser zwei Nocken (13) gedrückt sind.

10. Körper (1) einer Rückenlehne eines Sitzes gemäß dem voranstehenden Anspruch, **dadurch gekennzeichnet, dass** jeder Befestigungsrücklauf (18) des Verankerungsdrahtes (12) um den Verbindungssteg (15) einer der Nocken (13) des Nockenpaares herumgewickelt und verspannt ist.

11. Körper (1) einer Rückenlehne eines Sitzes gemäß Anspruch 1 bis 8, **dadurch gekennzeichnet, dass** die Verankerungsvorrichtung eine einzige Nocke (13) umfasst und dass der brückenförmige Teil (17) des Verankerungsdrahtes (12) um den Verbindungssteg (15) der Nocke (13) eingegriffen ist, wobei die zwei lateralen Arme (20) des brückenförmigen Teils (17) auf jeder Seite des Verbindungsstegs (15) aufstützend gegen seine lateralen Seiten (26) angeordnet sind.

12. Körper (1) einer Rückenlehne eines Sitzes gemäß einem der voranstehenden Ansprüche, **dadurch gekennzeichnet, dass** die Befestigungsrückläufe (18) durch zwei Öffnungen (27) des Körpers (1) einer Rückenlehne eingegriffen sind.

13. Körper (1) einer Rückenlehne eines Sitzes gemäß dem voranstehenden Ansprüche, **dadurch gekennzeichnet, dass** er wenigstens eine Röhre (10) umfasst, die sich im unteren Teil des Körpers (1) einer Rückenlehne erstreckt und dass die Befestigungsrückläufe (18) durch zwei Öffnungen (28) dieser Röhre (10) eingegriffen sind.

14. Realisierungsverfahren einer Verankerungsvorrichtung, die an die gesicherte Befestigung eines Kindersitzes angepasst ist, auf einem Körper (1) einer Rückenlehne eines hohlen Sitzes aus geblasenem Plastik für ein Kraftfahrzeug zur Realisierung eines Körpers (1) einer Rückenlehne eines Sitzes gemäß Anspruch 1, wobei das Verfahren **dadurch gekennzeichnet ist, dass**:
• Gleichzeitig zum Abformen durch Einblasen des Körpers (1) einer Rückenlehne wenigstens eine durch Blasen abgeformte Nocke (13) im unteren Teil des Körpers (1) einer Rückenlehne realisiert wird, wobei diese Nocke (13) einen Rückhaltekopf (14) umfasst, der mit dem Körper (1) einer Rückenlehne durch einen engeren Verbindungssteg (15) verbunden ist, der ihm eine allgemeine Pilzform verleiht;
• Ein Verankerungsdraht (12) vorgeformt wird, indem er lokal derart zurückgekrümmt wird, dass er einen brückenförmigen Teil (17) und zwei als Haken zurückgekrümmte Befestigungsrückläufe (18) umfasst, wobei der brückenförmige Teil (17) einen deutlich geraden, zentralen Abschnitt (19) umfasst, der durch zwei laterale Arme (20) verlängert wird, die sich auf jeder Seite des zentralen Abschnitts (19) erstrecken, wobei jeder dieser lateralen Arme (20) durch einen der Befestigungsrückläufe (18) verlängert wird;
• Der Verankerungsdraht (12) zwischen dem Körper (1) einer Rückenlehne und dem Rückhaltekopf (14) der Nocke (13) derart durchgeführt wird, dass der deutlich gerade, zentrale Abschnitt (19) seines brückenförmigen Teils (17) zur Vorderseite des Körpers (1) einer Rückenlehne hervorsteht;
• Der Verankerungsdraht (12) am Körper (1) einer Rückenlehne per Befestigung anhand seiner Befestigungsrückläufe (18) befestigt wird, wobei die Nocke (13) zur Immobilisierung des Verankerungsdrahtes (12) beiträgt.

15. Realisierungsverfahren einer Verankerungsvorrichtung gemäß Anspruch 14, **dadurch gekennzeichnet, dass**:
• Gleichzeitig zum Abformen durch Blasen des Körpers (1) einer Rückenlehne ein durch Blasen abgeformtes Nockenpaar (13) im unteren Teil des Körpers (1) einer Rückenlehne realisiert wird, wobei diese Nocken (13) einen Rückhaltekopf (14) umfassen, der am Körper (1) einer Rückenlehne durch einen engeren Verbindungssteg (15) angeschlossen ist, der ihnen eine allgemeine Pilzform verleiht;
• Ein Verankerungsdraht (12) vorgeformt wird, indem er lokal derart zurückgekrümmt wird, dass er ein brückenförmiges Teil (17) und zwei Befestigungsrückläufe (18) umfasst, die zur Außenseite als offene Haken zurückgekrümmt sind und eine Eingreiföffnung (29) umfassen, wobei der brückenförmige Teil (17) einen deutlich geraden, zentralen Abschnitt (19) umfasst, der durch zwei laterale Arme (20) verlängert wird, die sich auf jeder Seite des zentralen Abschnitts (19) erstrecken, wobei jeder dieser lateralen Arme (20) durch einen der Befestigungsrückläufe (18) verlängert wird;
• Der brückenförmige Teil (17) des vorgeformten Verankerungsdrahtes (12) zwischen den zwei Nocken (13) derart eingeführt wird, dass der zentrale Teil (19) zur Vorderseite des Körpers (1) einer Rückenlehne hervorsteht und der Verbindungssteg (15) jeder der zwei Nocken (13) in einen der Befestigungsrückläufe (18) eingeführt wird, der durch seine Eingreiföffnung (29) als offene Haken zurückgekrümmt ist, wobei die Befestigungsrückläufe (18) zwischen dem Körper (1) einer Rückenlehne und dem Rückhaltekopf (14) der Nocken (13) zur Positionierung kommen;
• Die Befestigungsrückläufe (18) um Verbindungsstege (15) herumgewickelt und verspannt werden, auf denen sie eingegriffen sind, so dass die offenen Haken der Befestigungsrückläufe (18) wieder verschlossen werden, wobei der Verankerungsdraht (12) somit auf dem Körper (1) einer Rückenlehne befestigt ist.

16. Realisierungsverfahren einer Verankerungsvorrichtung gemäß Anspruch 15, **dadurch gekennzeichnet, dass**, wenn die Befestigungsrückläufe (18) um Verbindungsstege (15) herum verspannt werden, die Befestigungsrückläufe (18) in die Wand der Befestigungsstege (15) derart eingedrückt werden, dass das die Nocken (13) bildende Plastik verformt wird.

17. Realisierungsverfahren einer Verankerungsvorrichtung gemäß Anspruch 14, **dadurch gekennzeichnet, dass**:
• Gleichzeitig mit dem Abformen durch Blasen des Körpers (1) einer Rückenlehne eine einzige per Blasen abgeformte Nocke (13) im unteren Teil des Körpers (1) einer Rückenlehne realisiert wird, wobei diese Nocke (13) einen Rückhaltekopf (14) umfasst, der mit dem Körper (1) einer Rückenlehne durch einen engeren Verbindungssteg (15) verbunden ist, der ihm eine allgemeine Pilzform verleiht;
• Im Innern des Körpers (1) einer Rückenlehne und im unteren Teil desselben eine Röhre (10), die zwei Öffnungen (28) umfasst, eingesetzt wird und in dem Körper (1) einer Rückenlehne zwei Öffnungen (27) ausgespart werden, die den Zugang zu den Öffnungen (28) der Röhre (10) vermitteln;
• Ein Verankerungsdraht (12) vorgeformt wird, indem er lokal derart zurückgekrümmt wird, dass er einen brückenförmigen Teil (17) und zwei Befestigungsrückläufe (18) umfasst, die als Haken nach oben und nach innen zurückgekrümmt sind, wobei der brückenförmige Teil (17) einen deutlich geraden, zentralen Abschnitt (19) umfasst, der durch zwei laterale Arme (20) verlängert ist, die sich auf jeder Seite des zentralen Abschnitts (19) erstrecken, wobei jeder dieser lateralen Arme (19) durch einen der Befestigungsrückläufe (18) verlängert wird;
• Die lateralen Arme (20) des brückenförmigen Teils (17) abgespreizt werden und der zentrale Steg (15) der Nocke (13) in den brückenförmigen Teil (17) des Verankerungsdrahtes (12) eingeführt wird, indem der Verankerungsdraht (12) zwischen dem Körper (1) einer Rückenlehne und dem Rückhaltekopf (14) der Nocke (13) durchgeführt wird, bis das freie Ende der Befestigungsrückläufe (18) gegenüber den Öffnungen (27) des Körpers (1) einer Rückenlehne platziert wird;
• Die freien Enden der Befestigungsrückläufe (18) in die Öffnungen (27) des Körpers (1) einer Rückenlehne, dann in die Öffnungen (28) der Röhre (10) eingeführt werden;
• Der Verankerungsdraht (12) nach vorne gezogen wird, ohne die lateralen Arme (20) gespreizt zu halten, so dass die Befestigungsrückläufe (18) komplett in die Öffnungen (28) der Röhre (10) eingegriffen werden, und zwar derart, dass der zentrale Abschnitt (19) des brückenförmigen Teils (17) zur Vorderseite des Körpers (1) einer Rückenlehne nach vorne hervorsteht.

## Claims

1. Seat backrest body (1) for motor vehicle in blow-molded plastic, **characterized**
**in that** it comprises, at the bottom, at least one anchoring device suitable for the secure attachment of a child's safety seat within the vehicle ;
**in that** said anchoring device includes :
- at least one hollow blow-molded plastic pin (13), this pin (13) including a retention head (14) connected to the seat backrest body (1) by means of a narrower connecting core (15), endowing it with an approximately mushroom shape ; and
- an anchoring wire (12) curved locally and incorporating a bridge part (17) that includes an approximately-rectilinear central part (19) prolonged by two lateral arms (20) extending either side of the central part (19) and two curved, hook-shaped attachment returns (18) each extending from one of the lateral arms (20) of the bridge part (17);
**in that** the anchoring wire (12) passes between the seat backrest body (1) and the pin (13) retention head (14), and is fixed onto the seat backrest body (1) by attachment via its attachment returns (18), with the pin (13) contributing to the immobilization of the anchoring wire (12); and
**in that** the central part (19) of the bridge part (17) of the anchoring wire (12) is protruding towards the front of the seat backrest body and constitutes a rectilinear anchoring part designed to securely attach a child's safety seat within the vehicle.

2. Seat backrest body according to claim 1, **characterized in that** the pin (13) is rooted at the lower edge (5) of the seat backrest body (1) and extends downwards in the bottom face of the seat backrest body (1).

3. Seat backrest body (1) according to any one of the preceding claims, **characterized in that** the retention head (14) is generally flat and defines a reception space (16) for the anchoring wire (12) between it and the seat backrest body (1).

4. Seat backrest body (1) according to the preceding claim, **characterized in that** there is an attachment area for the anchoring wire (12) within the reception space (16).

5. Seat backrest body (1) according to any one of the preceding claims, **characterized in that** the connecting core (15) is of approximately-trapezoidal cross-section, or of approximately-rectangular cross-section.

6. Seat backrest body (1) according to any one of the preceding claims, **characterized in that** the anchoring wire (12) is a length of steel wire.

7. Seat backrest body (1) according to any one of the preceding claims, **characterized in that** the lateral arms (20) of the bridge part (17) are upright, or inclined towards each other in direction of the front of the bridge part (17).

8. Seat backrest body (1) according to any one of the preceding claims, **characterized in that** the attachment returns (18) are curved towards the exterior, or are curved upwards and towards the interior.

9. Seat backrest body (1) according to any one of the preceding claims, **characterized in that** the anchoring device incorporates a pair of pins (13), and **in that** the bridge part (17) of the anchoring wire (12) is positioned between the two pins (13) of the pair of pins, with the two lateral arms (20) of the bridge part (17) being pressed against the interior sides (21) of the connecting cores (15) of these two pins (13).

10. Seat backrest body (1) according to the preceding claim, **characterized in that** each attachment return (18) of the anchoring wire (12) is rolled and tightened around the connecting core (15) of one of the pins (13) of the pair of pins.

11. Seat backrest body (1) according to any one of claims 1 to 8, **characterized in that** the anchoring device comprises a single pin (13), and **in that** the bridge part (17) of the anchoring wire (12) is engaged around the connecting core (15) of the pin (13), with the two lateral arms (20) of the bridge part (17) being positioned either side of the connecting core (15), bearing against its lateral walls (26).

12. Seat backrest body (1) according to any one of the preceding claims, **characterized in that** the attachment returns (18) are engaged through two apertures (27) in the seat backrest body (1).

13. Seat backrest body (1) according to the preceding claim, **characterized in that** it comprises at least one tube (10) extending in bottom part of the seat backrest body (1), and **in that** the attachment returns (18) are engaged through two apertures (28) in this tube (10).

14. Method for producing an anchoring device designed for the secure attachment of a child's safety seat onto a hollow seat backrest body (1) in blow-molded plastic for motor vehicles, in order to produce a seat backrest body (1) according to claim 1, the method being **characterized in that**:
- simultaneously during the blow-molding of the seat backrest body (1), at least one pin (13) is produced by blow-molding at the bottom of the seat backrest body (1), with this pin (13) comprising a retention head (14) connected to the seat backrest body (1) by a narrower connecting core (15), endowing it with approximately-mushroom shape;
- an anchoring wire (12) is pre-formed by curving it locally so that it comprises a bridge part (17) and two attachment returns (18) curved into hooks, with the bridge part (17) comprising an approximately-rectilinear central part (19) prolonged by two lateral arms (20) extending either side of the central part (19), with each of these lateral arms (20) being prolonged by one of the attachment returns (18);
- the anchoring wire (12) is passed between the seat backrest body (1) and the retention head (14) of the pin (13), so that the approximately-rectilinear central part (19) of its bridge part (17) protrudes towards the front of the seat backrest body (1);
- the anchoring wire (12) is secured to the seat backrest body (1) by attachment via its attachment returns (18), with the pin (13) contributing to the immobilization of the anchoring wire (12).

15. Method for producing an anchoring device according to claim 14, **characterized in that**:
- simultaneously during the blow-molding of the seat backrest body (1), a pair of pins (13) is produced by blow-molding at the bottom of the seat backrest body (1), with these pins (13) comprising a retention head (14) connected to the seat backrest body (1) by a narrower connecting core (15), endowing them with an approximately-mushroom shape;
- an anchoring wire (12) is pre-formed by curving it locally so that it comprises a bridge part (17) and two attachment returns (18) curved towards the exterior into open hooks and comprising an engagement opening (29), with the bridge part (17) incorporating an approximately-rectilinear central part (19) prolonged by two lateral arms (20) that extend either side of the central part (19); each of these lateral arms (20) being prolonged by one of the attachment returns (18);
- the bridge part (17) of the pre-formed anchoring wire (12) is inserted between the two pins (13) so that the central part (19) protrudes towards the front of the seat backrest body (1), and the connecting core (15) of each of the two pins (13) is engaged into one of the attachment returns (18) curved into open hooks, via its engagement opening (29), with the attachment returns (18) being located between the seat backrest body (1) and the retention head (14) of the pins (13);
- the attachment returns (18) are rolled and tightened around the connecting cores (15), on which they are engaged so as to close the open hooks of the attachment returns (18), with the anchoring wire (12) being thus secured onto the seat backrest body (1).

16. Method for producing an anchoring device according to claim 15, **characterized in that** when the attachment returns (18) are tightened around the connecting cores (15), the attachment returns (18) are inserted into the wall of the connecting cores (15), such as to distort the plastic of which the pins (13) are made.

17. Method for producing an anchoring device according to claim 14, **characterized in that**:
- simultaneously during the blow-molding of the seat backrest body (1), a single pin (13) is produced by blow-molding at the bottom of the seat backrest body (1), with this pin (13) comprising a retention head (14) connected to the seat backrest body (1) by a narrower connecting core (15), endowing it with an approximately-mushroom shape;
- a tube (10) incorporating two apertures (28) is placed within the seat backrest body (1) at the bottom of it, and two apertures (27) are provided in the seat backrest body (1), giving access to the apertures (28) in the tube (10);
- an anchoring wire (12) is pre-formed by curving it locally so that it comprises a bridge part (17) and two attachment returns (18) curved into hooks upwards and towards the interior, the bridge part (17) incorporating an approximately-rectilinear central part (19) prolonged by two lateral arms (20) that extend either side of the central part (19); each of these lateral arms (20) being prolonged by one of the attachment returns (18);
- the lateral arms (20) of the bridge part (17) are spaced apart, and the central core (15) of the pin (13) is engaged within the bridge part (17) of the anchoring wire (12), the anchoring wire (12) being passed between the seat backrest body (1) and the retention head (14) of the pin (13), until the free end of the attachment returns (18) is positioned facing the apertures (27) of the seat backrest body (1);
- the free ends of the attachment returns (18) are engaged into the apertures (27) of the seat backrest body (1), and then into the apertures (28) of the tube (10);
- the anchoring wire (12) is pulled forwards, without holding the lateral arms (20) spaced apart, so as to completely engage the attachment returns (18) into the apertures (28) of the tube (10), and so that the central part (19) of the bridge part (17) protrudes towards the front of the seat backrest body (1).
